**Europäisches Patentamt**

**European Patent Office**

**Office européen des brevets**

(11) Publication number: **0 006 330**
A1

# EUROPEAN PATENT APPLICATION

(21) Application number: **79301084.4**

(22) Date of filing: **07.06.79**

(51) Int. Cl.³: **B 60 K 20/04, B 60 K 20/12**

(30) Priority: **14.06.78 JP 71857/78**

(43) Date of publication of application: **09.01.80 Bulletin 80/1**

(84) Designated Contracting States: **DE FR GB**

(71) Applicant: **NISSAN MOTOR COMPANY, LIMITED, No.2, Takara-cho, Kanagawa-ku, Yokohama City (JP)**

(72) Inventor: **Sukeshita, Kazumi, No. 5-20-22, Midoro-cho Koganei-City, Tokyo (JP)**

(74) Representative: **Freed, Arthur Woolf et al, MARKS & CLERK 57-60 Lincoln's Inn Fields, London WC2A 3LS (GB)**

(54) **Gear shift control linkage.**

(57) A gear shift control linkage for use with a transmission in a vehicle has a support link (30) having a pivot end pivotally connected to the body (12) of the vehicle and a connecting end linked by means of a support rod (22) with the casing (10) of the transmission. The support link (30) has a fulcrum (20a) which is located between its pivot and connecting ends and at which it pivotally supports a gear shift control lever (20). The gear shift control lever (20) has an upper handle end (20b) and a lower connecting end linked by means of a control rod (16) with a gear shift actuating shaft (18) and is arranged to turn about the fulcrum (20a) in moving the control rod (16) and therefore the gear shift actuating shaft (18) in order to effect gear shifting in the transmission. The fulcrum (20a) is displaceable in a circular arc in response to displacement of the transmission whereby the displacement of the handle end (20b) of the gear shift control lever (20) is limited to quite a small value.

"GEAR SHIFT CONTROL LINKAGE".

This invention relates to gear shift control linkages for transmissions and more particularly to a gear shift control linkage for use with a remote control manual transmission mounted on a front-drive vehicle with a transversely-mounted engine at front.

In a front-drive vehicle of the above-mentioned type, its transmission is arranged transversely and fixed to the engine to constitute a single power unit. The transmission is controlled by a gear shift control linkage including a gear shift control lever which is located behind the transmission and operatively connected to it by a control rod. In this type of vehicle, when a torque is transmitted from the power unit to front road wheels or vice versa through a final drive unit and cardan or half-shafts, there is created a torque reaction which tends to rotate the power unit rearwardly or forwardly of the vehicle. As a result, the power unit rocks or is displaced forwardly and rearwardly, causing the gear shift control lever to swing responsively. In this instance, since the gear shift control lever is pivoted at its lower end and of a considerable length relative to its diameter and has at its upper handle end a control knob of an appreciable weight relative to its overall weight, the swing of the gear shift control lever in response to forward and rearward displacement of the power unit is liable to be amplified, which inevitably causes a deterioration of the feeling of the gear shift control lever on manipulation and, in the worse possible case, causes the gear of the transmission to jump out of engagement.

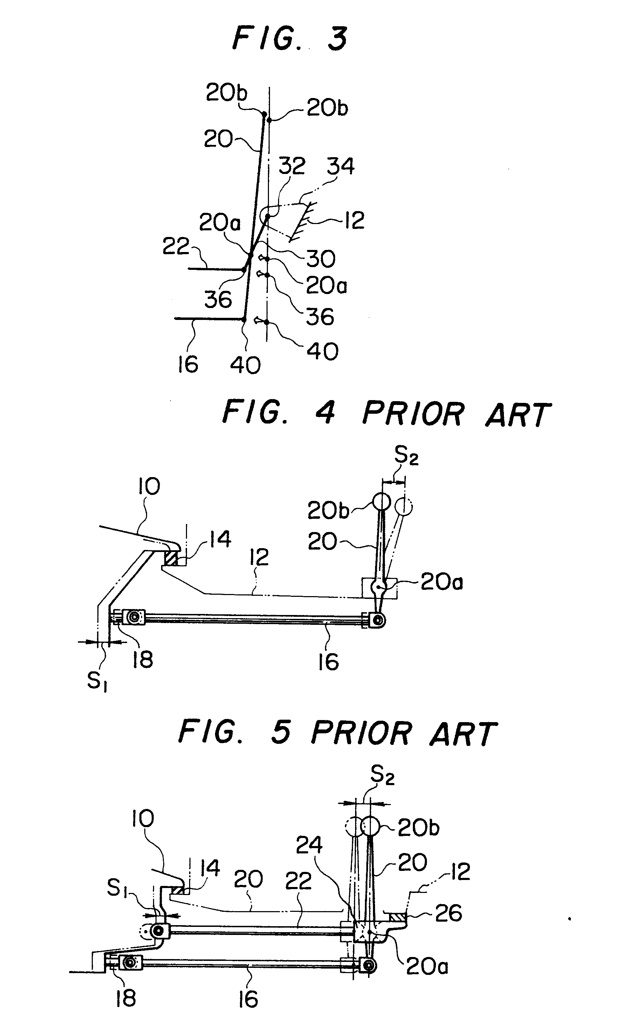

There is shown diagrammatically in Figure 4 of the accompanying drawings of this application, a conventional gear shift control linkage for use with a transmission in a vehicle of the afore-mentioned type.

In Figure 4, designated by reference numeral 10 is a transmission which is connected integrally with an engine (not shown), by 12 a vehicle body, by 14 a buffer member, made of a resilient material such as rubber, which is interposed between the vehicle body 12 and the transmission 10, by 16 a control rod connected at its forward end to a gear shift actuating shaft 18, and by 20 a gear shift control lever which has a lower connecting end connected to the rearward end of the control rod 16 and an upper handle end fitted with a control knob 20b. The gear shift control lever 20 is pivotally connected at 20a to the vehicle body 12, that is, the gear shift control lever 20 is carried at 20a on a fixed fulcrum about which it turns in moving the control rod 16 and therefore the gear shift actuating shaft 18 in order to effect gear shifting of the transmission 10.

With this arrangement, when the transmission 10 is displaced by $S_1$, the control knob 20b is displaced by $S_2$. In this instance, since the displacement of the control knob 20b in response to that of the transmission 10 is amplified by the effect of leverage, $S_2$ is larger than $S_1$.

Figure 5 of the accompanying drawings of this application shows another conventional gear shift control linkage for use with a transmission in a vehicle of the afore-mentioned type.

In this conventional gear shift control linkage of Figure 5, wherein like parts to those of Figure 4 are given like reference numerals, a support rod 22 is provided which is attached at its forward end to the casing of the transmission 10 and supports at its rearward end a support bracket 24. The support bracket 24 slidably engages, by way of a buffer member 26 made of a resilient material such as rubber, with a vehicle body 12 and pivotally supports at 20a a gear shift control lever 20. Thus, in this type gear shift control linkage, the gear shift control lever 20 is carried at 20a on a movable fulcrum which is movable in a straight line in response to displacement of the transmission.

With this arrangement, when the transmission 10 is displaced by $S_1$, the support bracket 24 is displaced by $S_2$ together with the gear shift control lever 20. In this instance, since the gear shift control lever 20 is displaced in a parallel manner, that is, the angular position of the gear shift control lever 20 about the fulcrum 20a is kept unchanged, the displacement $S_2$ of the control knob 20b is equal to the displacement $S_1$ of the transmission 10.

These conventional gear shift control linkages are disadvantageous since the control knob 20b is displaced appreciably in response to displacement of the transmission 10, which inevitably causes a deterioration of the feeling of manipulation of the gear shift control lever 20 and, in the worst possible case, causes the gear of the transmission 10 to jump out of engagement.

It is accordingly an object of the present invention to provide a gear shift control linkage for an automotive transmission, which alleviates at least one of the foregoing drawbacks inherent in a conventional gear shift control linkage of the described types.

According to the present invention there is provided a gear shift control linkage for use with a transmission in a vehicle, the transmission having a casing and a gear shift actuating shaft and being adapted to perform gear shifting by selective movement of said gear shift actuating shaft, the shift control linkage comprising; a gear shift control lever having an upper handle end and a lower connecting end, a control rod linking the connecting end of said gear shift control lever with said gear shift actuating shaft, support means supporting the gear shift control lever at a portion thereof between said handle end and said connecting end so as to form a fulcrum about which the gear shift control lever turns in moving said control rod and therefore the gear shift actuating shaft, and connecting means connecting the support means to the casing of the transmission, characterised in that said support means is pivotally connected to the connecting means and to the body of the vehicle such that said fulcrum is displaceable in the arc; and in that the connecting means connects said support means to the casing of said transmission in such a manner that when said transmission is displaced relative to the body of the vehicle in either of the alternate directions of pushing and pulling said control rod, the fulcrum is displaced in the arc in the corresponding direction and by an amount which is smaller than that of displacement of the lower connecting end of the gear shift control lever.

The gear shift control linkage according to this invention may be constructed so that the displacement of the control knob or handle end of its gear shift control lever in response to that of the associated transmission is limited to quite a small value and is suitable for use with a remote control manual transmission mounted on a front-drive vehicle of the described type.

5.

Further gear shift control linkage according to the invention can improve feeling of manipulation of its gear shift control lever. Also the gear shift control linkage will prevent the gear of corresponding transmission from jumping out of engagement and is simple in construction and easy to manufacture.

An exemplary embodiment of the present invention will now be described with reference to the accompanying drawings, in which:

Figure 1 is a side elevational view of a gear shift control linkage embodying the present invention;

Figure 2 is a fragmentary cross sectional view taken generally along the line II-II of Figure 1;

Figure 3 is a diagrammatic representation of the gear shift control linkage of Figure 1; and

Figures 4 and 5 are schematic side elevational views of conventional gear shift control linkages with which the present invention is concerned.

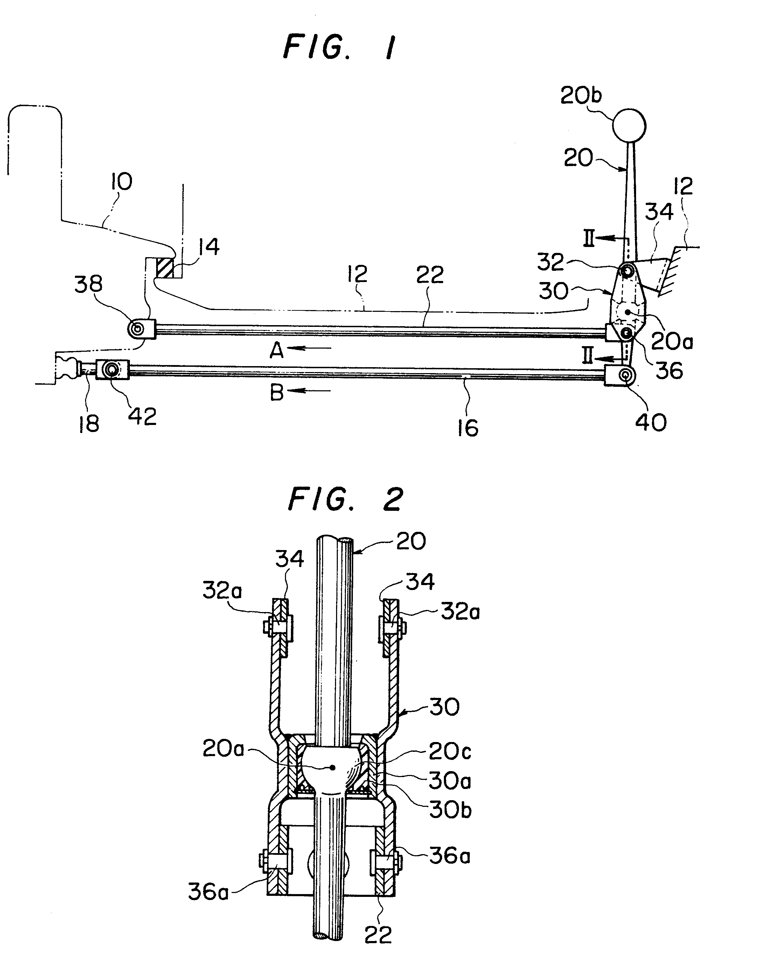

A gear shift control linkage embodying the present invention will now be described with reference to Figures 1 to 3 inclusive, in which like parts to those of Figures 4 and 5 are given like reference numerals and will not be described again for the sake of brevity.

The gear shift control linkage of this invention is provided with a support link 30 which has an upper pivot end pivotally connected at 32 to a bracket 34 by means of pivot pins 32a as shown in Figure 2; the bracket 34 is in turn fixedly secured to a vehicle body 12. The support link 30 further has a lower connecting end pivotally connected at 36 to the bifurcated rearward end of a support rod 22 by means of pivot pins 36a as shown in Figure 2; the forward end of the support rod 22 is pivotally connected at 38 to the casing of a transmission 10.

A gear shift control lever 20 has an upper handle end fitted with a control knob 20b and a lower connecting end linked by means of a control rod 16 with a gear shift actuating shaft 18. More specifically, the control rod 16 is arranged to have a longitudinal axis transverse to that of the gear shift control lever 20 and has a rearward end connected at 40 to the lower connecting end of the gear shift control lever 20 and a forward end connected at 42 to the gear shift actuating shaft 18. The control rod 16 is also arranged to be substantially parallel to the support rod 22, as shown.

The gear shift control lever 20 is pivotally supported at 20a. i.e. at a portion thereof between the handle end and the connecting end, by the support link 30. In other words, the support link 30 is adapted to have a fulcrum 20a about which the gear shift control lever 20 turns in moving the control rod 16 and therefore the gear shift actuating shaft 18 in order to effect gear shifting of the transmission 10. In this instance, it is to be noted that the fulcrum 20a is arranged so as to be located on the support link 30 between the pivot points 32 and 36, i.e. between the upper pivot end and the lower connecting end thereof. More specifically, as shown in Figure 2, the gear shift control lever 20 is formed with a ball-shaped section 20c, while the support link 30 is provided with pivot means comprised of a rigid socket casing 30a welded or otherwise secured to the body of the support link 30 and a nylon or other suitable material socket member 30b fitted within the socket casing 30a. With this, the ball-shaped section 20c and the pivot means are assembled to form a ball-and-socket joint.

The operation of the gear shift control linkage thus constructed according to the present invention will now be described.

When the transmission 10 is displaced forwardly, i.e. in the direction of pulling the control rod 16, the support rod 22 and the control rod 16 are displaced forwardly, i.e. in the direction indicated by arrows "A" and "B" of Figure 1. When this occurs, as diagrammatically shown in Figure 3, the fulcrum 20a and the pivot points 36 and 40 move from the right-handed positions into the left-handed positions, respectively. In this instance, since the pivot point 32 remains stationary, the displacement of the fulcrum 20a is smaller than that of the pivot points 36 and 40. As a result, the gear shift control lever 20 is caused to turn slightly rearwardly about the fulcrum 20a, i.e. the angular position of the gear shift control lever 30 is changed whereby the resulting displacement of the control knob 20b is limited to a small value.

The most suitable position of the fulcrum 20a on the support link 30 depends on the lengths of the gear shift control lever 20 and the support link 30 and the maximum amount of displacement of the transmission 10. By determining the position of the fulcrum 20a suitably, the displacement of the control knob 20b in response to that of the transmission 10 can be limited to quite a small value.

The illustrated gear shift control linkage according to this invention produces the similar effect as previously described when the transmission 10 is displaced rearwardly, i.e in the direction of pushing the control rod 16.

From the foregoing description, it is to be understood that the gear shift control linkage of this invention is provided with pivotal support means supporting the gear shift control lever 20 at a portion thereof between the handle end and the connecting end so as to form a fulcrum which is movable in a circular arc and about which the gear shift control lever 20 turns in moving the control rod 16 and therefore the gear shift actuating shaft 18 in order to effect gear shifting of the transmission 10.

8.

It will be appreciated that the illustrated gear shift control linkage according to this invention is provided with connecting means linking the connecting end of the support link 30 with the casing of the transmission 10 in such a manner that when the transmission 10 is displaced relative to the body 12 of the vehicle in either of alternate directions of pushing and pulling the control rod 16 in the fulcrum 20a is displaced in the circular arc in the corresponding direction and by an amount which is smaller than that of displacement of the connecting end of the gear shift control lever 20.

CLAIMS

1.     A gear shift control linkage for use with a transmission (10) in a vehicle, the transmission having a
casing and a gear shift actuating shaft (18) and being
adapted to perform gear shifting by selective movement
of said gear shift actuating shaft, the shift control
linkage comprising:  a gear shift control lever (20)
having an upper handle end and a lower connecting end, a
control rod (16) linking the connecting end of said gear
shift control lever with said gear shift actuating shaft,
support means (30,30a,30b) supporting the gear shift
control lever at a portion (20c) thereof between said
handle end and said connecting end so as to form a fulcrum
(20a) about which the gear shift control lever turns in
moving said control rod and therefore the gear shift
actuating shaft, and connecting means connecting the
support means to the casing of the transmission,
characterised in that said support means (30) is pivotally
connected to the connecting means (22) and to the body
(12) of the vehicle such that said fulcrum is displaceable
in an arc;  and in that the connecting means (22) connects
said support means (30) to the casing (10) of said transmission in such a manner that when said transmission is
displaced relative to the body (12) of the vehicle in
either of the alternate directions of pushing and pulling
said control rod (16), the fulcrum (20a) is displaced
in the arc in the corresponding direction and by an amount
which is smaller than that of displacement of the lower
connecting end of the gear shift control lever (20).

2.     A gear shift control linkage according to Claim 1,
characterised in that the support means comprise a
support link (30) having an upper pivot end pivotally connected to the body (12) of the vehicle and a lower
connecting end connected to the connecting means (22),
and a pivot 30a,30b pivotally connecting said portion
(20c) of the gear shift control lever (20) to the
support link (30), said pivot forming on the support
link (30) the fulcrum (20a) which is located between
the pivot end and the connecting end of the support
link (30).

3.    A gear shift control linkage according to Claim 2,
characterised in that the connecting means comprise
a support rod (22) which is connected at one end to the
casing (10) of the transmission  and at its other
end to the connecting end of said support link (30).

4.    A gear shift control linkage according to any of
Claims 1 to 3, characterised in that the transmission
(10) is arranged transversely at the front of said
vehicle, and in that the gear shift control lever (20)
is located behind the transmission with the fulcrum
(20a) displaceable in the arc forwardly and rearwardly
of the vehicle.

*FIG. 1*

*FIG. 2*

# FIG. 3

# FIG. 4 PRIOR ART

# FIG. 5 PRIOR ART

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| X | DE - A - 2 658 274 (TOYOTA JIDOSHA KOGYO K.K.) <br> * page 6, line 22 to page 10, line 6; fig. * <br> -- | 1-4 | B 60 K 20/04 <br> B 60 K 20/12 |
| | GB - A - 1 402 662 (CRYSLER UNITED KINGDOM LTD.) <br> * page 1, line 87 to page 2, line 84; fig. * <br> -- | 1 | |
| | DE - A - 2 743 875 (MANNO KOGYO K.K.) <br> * claims; fig. * <br> -- | 1 | TECHNICAL FIELDS SEARCHED (Int.Cl.3) <br><br> B 60 K 20/00 |
| A | FR - A - 2 215 044 (CRYSLER FRANCE) <br> * claims; fig. * <br> ---- | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search | Date of completion of the search | Examiner | |
| Berlin | 07-09-1979 | LEITZ | |

EPO Form 1503.1 06.78